# EUROPÄISCHE PATENTSCHRIFT

(11) **EP 3 957 148 B1**
(45) Veröffentlichungstag und Bekanntmachung des Hinweises auf die Patenterteilung: **27.11.2024**
(21) Anmeldenummer: 21191746.3
(22) Anmeldetag: 17.08.2021
(51) Int. Cl.: A01C 23/00

(54) **VORRICHTUNG ZUR VERTEILUNG VON GÜLLE**
DEVICE FOR DISTRIBUTING LIQUID MANURE
DISPOSITIF DE DISTRIBUTION DE LISIER

(30) Priorität: 21.08.2020 DE 202020104865 U; 04.02.2021 DE 202021100568 U
(43) Veröffentlichungstag der Anmeldung: 23.02.2022
(73) Patentinhaber: Burger, Stefan, 87758 Kronburg (DE)
(72) Erfinder: Burger, Stefan, 87758 Kronburg (DE)
(74) Vertreter: Patentanwälte Olbricht, Buchhold, Keulertz Partnerschaft mbB

(56) Entgegenhaltungen:
- EP-A1- 0 772 965
- EP-B1- 2 144 486
- DE-C- 440 124
- DE-C2- 19 703 183
- GB-A- 1 576 775

## Beschreibung

Die Erfindung betrifft eine Vorrichtung zum Ausbringen von Gülle gemäß dem Oberbegriff von Anspruch 1.

Gülle zum Düngen von Böden, Äckern und Feldern wird üblicherweise unter Verwendung von entsprechenden Gülleausbringfahrzeugen ausgebracht. Diese sind in der Regel mit einer Vorrichtung ausgestattet, welche zumindest einen Verteiler oder ein Verteilerrohr oder einen Verteilerteller umfasst. Bei den Vorrichtungen, die ein Verteilerrohr aufweisen, wird die Gülle von einem externen Güllespeicher zum Verteilerrohr gepumpt, von wo aus sie an gewünschter Stelle ausgebracht wird. Während des Ausbringens befindet sich das Verteilerrohr zumindest für die Dauer der Ausbringung im Wesentlichen in einer Querstellung zur Fahrtrichtung des Ausbringfahrzeugs, um die Gülle somit auf eine möglichst große Fläche zu verteilen. Während dieser "aktiven Stellung" ist die Beweglichkeit des Gülleausbringfahrzeugs stark eingeschränkt.

Aufgrund der Tatsache, dass Gülle oftmals grobe und feste Bestandteile aufweist, kann es außerdem zu einem Verstopfen der Auslassöffnungen des Verteilerrohrs kommen, wodurch eine gleichmäßige Verteilung der Gülle verhindert wird. Darüber hinaus ist es wünschenswert, den Güllezufluss auf dem Feld zu steuern, um somit einer Überdüngung vorzubeugen.

Ein weiterer Nachteil, der sich aus den gängigen Vorrichtungen ergibt, besteht darin, dass die Verteilerrohre die Gülle lediglich über räumlich begrenzte Bereiche - in der Regel Austrittslöcher - abgeben, was dazu führt, dass hinter dem Ausbringfahrzeug sowohl "streifenartige" Güllespuren entstehen können als auch Spuren, die keine oder nur wenig Gülle aufweisen.

DE 197 03 183 C2 beschreibt einen Verteiler für Gülle. Dieser Verteiler kann mit einem Vorratsbehälter für Gülle verbunden werden und umfasst eine Vielzahl von Schläuchen, welche die Gülle von einem Auslass bis kurz über den zu düngenden Erdboden transportieren. Jeder der Schläuche ist über eine separate Auslassöffnung mit dem Auslass des Verteilers verbunden.

In GB 1 576 775 A wird eine Vorrichtung zur Verteilung von Gülle beschrieben. Die Austrittsöffnung für die Gülle wird bei dieser Vorrichtung durch einen horizontal orientierten Schlitz gebildet, welcher in seiner Breite einstellbar ausgeführt ist.

Der Erfindung liegt somit die Aufgabe zu Grunde, die Nachteile im Stand der Technik zu beseitigen und eine Vorrichtung zum Ausbringen von Gülle bereitzustellen, mit der die Gülleausbringung optimiert werden kann, wobei die Vorrichtung insbesondere eine gleichmäßige Gülleverteilung auf dem Feld, eine einfache Steuerung der Gülleausbringung sowie ein hohes Maß an Beweglichkeit für das Ausbringfahrzeugs gewährleisten soll. Hauptmerkmale der Erfindung sind im kennzeichnenden Teil von Anspruch 1 angegeben. Spezielle und vorteilhafte Ausgestaltungen sind Gegenstand der Unteransprüche.

Zur Lösung der Aufgabe ist erfindungsgemäß eine Vorrichtung zur Verteilung von Gülle vorgesehen, umfassend mindestens eine Verteilereinheit sowie eine Halterung zur Befestigung der mindestens einen Verteilereinheit an einem Güllespeicher, wobei die mindestens eine Verteilereinheit Folgendes umfasst: einen Verteiler und ein Schlauchsystem. Die Vorrichtung ist dadurch gekennzeichnet, dass mindestens ein Verteilerrohr vorgesehen ist, wobei das Verteilerrohr entlang einer Mantelfläche Eintrittsöffnungen zum fluiddichten Verbinden des Verteilerrohrs mit dem Schlauchsystem aufweist.

Die Vorrichtung ist weiterhin dadurch gekennzeichnet, dass das Verteilerrohr entlang seiner Mantelfläche mindestens eine Austrittsöffnung aufweist, welche sich im Wesentlichen in eine Längsrichtung des Verteilerrohrs erstreckt. Der Güllespeicher ist dabei kein Bestandteil der erfindungsgemäßen Vorrichtung.

Die erfindungsgemäße Ausgestaltung des Verteilerrohrs hat dabei den Vorteil, dass sie zu einer gleichmäßigen Verteilung der Gülle auf dem Feld führt, da die Gülle über die gesamte Länge der schlitzförmigen Austrittsöffnung auf dem Boden verteilt werden kann. Dazu ist vorgesehen, dass die Austrittsöffnung an einer dem Boden zugewandten Seite des Verteilerrohrs in der Mantelfläche des Verteilerrohrs angeordnet ist. Die Entstehung von unerwünschten Güllespuren kann damit verhindert werden.

Der erfindungsgemäße Vorschlag erlaubt es, dass die Gülle sehr bodennah ausgebracht wird. Dabei wird die Gülle direkt aus dem Verteilerrohr auf dem Boden verteilt. Die bodennahe Verteilung hat den Vorteil, dass die Geruchsbelästigung erheblich reduziert wird, da die Gülle nicht mehr verspritzt und teilweise als Aerosole die Umgebungsluft gelangt, aber gleichwohl die Gülle auf einer großen Fläche verteilt wird.

Bei einer bevorzugten Ausgestaltung des Vorschlags ist vorgesehen, dass das Verteilerrohr eine längsverlaufende, schlitzförmige Austrittsöffnung aufweist. Die mindestens eine Austrittsöffnung ist dabei so dimensioniert, dass die Gülle nicht sofort aus dem Verteilerrohr herausläuft, sondern sich etwas verteilt, und auf der anderen Seite auch nicht zu klein gewählt ist, dass sich diese Austrittsöffnung im Betrieb dann zusetzt und verstopft. Vorteilhafter Weise dabei gefunden worden, dass eine schlitzförmige Austrittsöffnung hierfür günstig ist, wobei sich der Schlitz vorzugsweise in Längsrichtung des Verteilerrohres befindet.

Unter "schlitzförmig" ist im Sinne dieser Anmeldung eine vorzugsweise rechteckige Form zu verstehen, deren lange Seiten mindestens doppelt, bevorzugt mindestens fünfmal so lang sind wie ihre kurzen Seiten. Dabei ist es auch möglich, dass die kurzen Seiten abgerundet ausgebildet sind.

Im übrigen legt die Erfindung die Ausgestaltung der Austrittsöffnung nicht fest. Sie ist sehr variabel gestaltbar. So ist es möglich, dass die Austrittsöffnung zum Beispiel auch kreisrund, oval, dreieckig, mehreckig oder auch quadratische ausgebildet ist. Dabei umfasst die erfindungsgemäße Lösung Vorschläge, bei welcher nur eine, gegebenenfalls sich lang erstreckende und große Austrittsöffnung vorgesehen ist, wie auch Lösungen, bei welcher eine Mehrzahl von gleichen oder unterschiedlichen Austrittsöffnungen verwendet wird.

Daher ist gemäß einer vorteilhaften Weiterentwicklung vorgesehen, dass eine Mehrzahl von Austrittsöffnungen an dem Verteilerrohr vorgesehen ist. Eine solche Ausgestaltung hat Vorteile für die Stabilität des Verteilerrohres.

Bei einer bevorzugten Ausgestaltung des Vorschlags ist vorgesehen, dass die Austrittsöffnungen in Längsrichtung des Verteilerrohres hintereinander und/oder versetzt zueinander angeordnet sind. Ein solcher Vorschlag verbindet eine entsprechende Stabilität des Verteilerrohres mit einer hohen Variabilität bei dem Einsatz der Erfindung. Es ist zum Beispiel vorgesehen, dass das Verteilerrohr um seine Längsachse verstellbar ist und so im bodennahen Bereich verschiedene Austrittsöffnungen, je nach Stellung des Verteilerrohres, vorgesehen sind, wodurch sich einerseits das Verteilmuster der Gülle am Boden und andererseits auch die Güllemenge, die verteilt wird, einstellen lässt.

In einer vorteilhaften Ausgestaltung ist vorgesehen, dass eine Verschlussvorrichtung vorgesehen ist, die in verschiedenen Stellungen positionierbar ist und in den verschiedenen Stellungen die Austrittsöffnung/en mehr oder weniger frei gibt. Die vorgeschlagene Verschlussvorrichtung besteht aus einer Mehrzahl von Abdeckungen, wobei idealerweise jeder Austrittsöffnung eine Abdeckung zugeordnet ist. Die Abdeckung ist auf eine Führung beweglich gelagert. Die Führung ist dabei zum Beispiel parallel zur Längsrichtung des Verteilerrohres ausgerichtet, es kann aber auch eine Führung in Umfangsrichtung vorgesehen sein. Die Abdeckungen sind durch ein gemeinsames, zentrales Gestänge gemeinsam bewegbar. Doch eine solche Ausgestaltung ist es möglich, eine insbesondere auch stufenlose Einstellung der Ausbringmenge an Gülle zu realisieren.

Nach einer weiteren Ausführungsform weist die mindestens eine, vorzugsweise schlitzförmige Austrittsöffnung eine Länge auf, die mindestens ein Viertel, bevorzugt mindestens die Hälfte, der Länge des Verteilerrohrs beträgt. Gemäß einer besonders bevorzugten Ausgestaltung ist vorgesehen, dass sich die schlitzförmige Austrittsöffnung im Wesentlichen über die gesamte Länge des Verteilerrohrs erstreckt. Auf diese Weise lässt sich gewährleisten, dass die Gülle gleichmäßig unterhalb des Verteilerrohrs ausgebracht wird, anstatt nur auf bestimmte Bereiche unterhalb des Verteilerrohrs begrenzt zu werden. In letzterem Falle können hinter dem Ausbringfahrzeug sowohl "streifenartige" Güllespuren entstehen sowie Spuren, die überhaupt keine Gülle enthalten. Durch die erfindungsgemäße Austrittsöffnung wird eine derartige Spurenbildung vermieden. Die mindestens eine Austrittsöffnung verläuft vorzugsweise parallel entlang der Längsrichtung des Verteilerrohrs. Es ist aber auch denkbar, dass die Austrittsöffnung in einem leichten Winkel zur Längsrichtung, also spiralig, entlang der Mantelfläche des Verteilerrohrs verläuft.

Gemäß einem vorteilhaften Ausführungsbeispiel ist vorgesehen, dass die Vorrichtung einen Zuführschlauch umfasst, der den mindestens einen Verteiler fluiddicht mit dem Güllespeicher verbindet. Über den Zuführschlauch kann die Gülle vom Güllespeicher zum Verteiler gepumpt werden. Der Schlauch ist vorzugsweise flexibel ausgebildet, um den Ein- und Ausklappbewegungen der Vorrichtung standzuhalten. Denkbar sind zum Beispiel PVC- oder Gummischläuche.

In einer bevorzugten Ausgestaltung ist vorgesehen, dass das Verteilerrohr aus Eisen oder Stahl gefertigt ist. Auch ist es möglich, das Verteilerrohr aus Aluminium, zum Beispiel einem strangpressgezogenen Aluminiumprofil zu fertigen. Aluminium, oder andere Leichtmetalle bzw. Leichtmetalllegierungen, haben den Vorteil, dass diese bei gleich hoher mechanischer Belastbarkeit weniger wiegen und somit die Nutzlast erhöhen. Gleichwohl ist es aber auch möglich, das Verteilerrohr aus Kunststoff (z.B. PE oder PVC) zu fertigen, was bei der Herstellung Vorteile bietet und das Gewicht noch weiter reduziert. Dabei sind auch Kunststoffe bekannt, die auch bei einer abrasiven Beanspruchung dauerhaft einsetzbar sind.

Es ist ferner möglich, dass das Schlauchsystem eine Mehrzahl von Schläuchen umfasst, die den Verteiler mit je einer der Eintrittsöffnungen fluiddicht verbinden. Durch das Schlauchsystem wird die Gülle vom Verteiler zum Verteilerrohr gepumpt. Wie der Zuführschlauch können auch die Schläuche des Schlauchsystems aus PVC oder Gummi hergestellt sein, um Bewegungen in verschiedene Richtungen zu erlauben. Gemäß einer Weiterentwicklung der Vorrichtung ist außerdem vorgesehen, dass die Eintrittsöffnungen als vorzugsweise flexible Befüllstutzen ausgebildet sind, die im Wesentlichen gleichmäßig über die Länge des Verteilerrohrs verteilt sind. Eine derartige Ausgestaltung von Schlauchsystem und Eintrittsöffnungen hat den Vorteil, dass die Gülle an verschiedenen Stellen des Verteilerrohr gleichzeitig ankommt, was zu einer besseren Verteilung der Gülle innerhalb des Rohrs führt. Außerdem sorgt eine derartige Ausgestaltung aufgrund der flexiblen Elemente für eine höhere Belastbarkeit der Vorrichtung, was zu einem niedrigen Wartungsaufwand sowie zu einer erhöhten Lebensdauer führt.

In einer vorteilhaften Variante ist vorgesehen, dass das Verteilerrohr eine Förderschnecke aufweist, die in einem Innenraum des Verteilerrohrs angeordnet ist. Die Förderschnecke ist insbesondere zur Verteilung von Gülle geeignet und weist eine Antriebswelle auf, über die sie angetrieben werden kann. Die Förderschnecke dient außerdem dazu, die Gülle aus der schlitzförmigen Austrittsöffnung zu pressen. Darüber hinaus kann die Förderschnecke Schneidelemente aufweisen, die der Zerkleinerung der Gülle dienen. Die Antriebswelle zum Antreiben der Förderschnecke ist bevorzugt außerhalb des Verteilerrohres angeordnet, wobei die Antriebswelle ein Gehäuse aufweisen kann, das bündig mit dem Verteilerrohr abschließt. Mit einer Förderschnecke kann die Gülle auf einfache Art und Weise aus der mindestens einen Austrittsöffnung auf das Feld ausgebracht werden.

Der erfindungsgemäße Vorschlag ist aber auch ohne den Einsatz einer Förderschnecke funktionsfähig. Dabei ist zu beachten, dass die Gülle aus dem Güllespeicher mit Hydraulikpumpen, also unter entsprechenden Druck, in das Verteilerrohr eingebracht wird. Bei entsprechender Dimensionierung dieser Hydraulikpumpen pressen diese die Gülle durch den schlitzförmige Austrittsöffnung und verteilen so die Gülle erfindungsgemäß.

Gemäß einem weiteren Ausführungsbeispiel umfasst die Halterung einen Rahmen. Bevorzugt weist der Rahmen an zwei gegenüberliegenden Seitenteilen je einen Flügel auf, wobei jeder Flügel über eine Gelenk- oder Scharnierverbindung schwenkbar mit dem Rahmen verbunden ist. Nach einer vorteilhaften Ausführung ist außerdem vorgesehen, dass an jedem Flügel je eine Verteilereinheit angeordnet ist. Es kann ferner vorgesehen sein, dass der Rahmen und/oder die Flügel jeweils mindestens ein Rad oder Gleitteller aufweisen. Die Räder oder Gleitteller der Halterung, also des Rahmens und/oder der Flügel, dienen dazu, zumindest einen Teil des Gewichts der Vorrichtung in der aktiven Stellung zu tragen und somit ein Anheben des Zugfahrzeugs und damit einhergehend einen Verlust der Bodentraktion und schließlich der Antriebskraft zu verhindern. Dabei wird als "aktive Stellung" diejenige Stellung der Vorrichtung bezeichnet, in der sich die Vorrichtung für die Dauer der Ausbringung der Gülle auf dem Feld befindet. In dieser Stellung ist das mindestens eine Verteilerrohr im Wesentlichen in Querstellung zur Fahrtrichtung des Ausbringfahrzeugs ausgerichtet. Darüber hinaus wird das mindestens eine Verteilerrohr in der aktiven Stellung nur geringfügig über dem Boden gehalten. Bevorzugterweise beträgt der Abstand zwischen Boden und Verteilerrohr ca.5 bis 30 cm. Demgegenüber ist unter einer "inaktiven Stellung" diejenige Stellung der Vorrichtung zu verstehen, bei der sich das mindestens eine Verteilerrohr nicht in Querstellung zur Fahrtrichtung des Ausbringfahrzeugs befindet, sondern stattdessen in Fahrtrichtung neben dem Güllespeicher. Dazu liegt der Rahmen in der inaktiven Stellung hochgeklappt, d.h. senkrecht zum Boden vor. Entsprechend liegt der Rahmen bei der aktiven Stellung der Vorrichtung ausgeklappt, d.h. im Wesentlichen parallel zum Boden vor.

Der Rahmen ist vorteilhafterweise über eine Gelenk- oder Scharnierverbindung entweder mit dem Ausbringfahrzeug oder mit dem Güllespeicher verbunden. Durch die Gelenk- oder Scharnierverbindung lässt sich die Halterung (und somit das mindestens eine Verteilersystem) von der inaktiven Stellung in die aktive Stellung bzw. von der aktiven Stellung in die inaktive Stellung bewegen.

Gemäß einer möglichen Ausführungsform sind die Räder des Rahmens und/oder der Flügel drehbar an dem Rahmen bzw. an den Flügeln angebracht, wodurch jedes Rad eine Drehachse ausbildet, die senkrecht zur Rotationsachse des Rads verläuft. Hierdurch wird das Risiko eines Schleifens oder Blockierens der Räder bei Kurvenfahrten des Ausbringfahrzeugs signifikant minimiert. Auf diese Weise können Beweglichkeit und Manövrierbarkeit der Vorrichtung erhöht werden, was das Ausbringen der Gülle auf dem Feld erleichtert. Zur Abstützung des Rahmens und/oder der Flügel können gleichwohl auch Gleitteller verwendet werden.

Bevorzugterweise umfasst die Vorrichtung zwei Verteilereinheiten, wobei an jedem der beiden Flügel je eine Einheit angeordnet ist. Die Vorrichtung kann dabei so ausgestaltet sein, dass die Verteilerrohre der beiden Verteilereinheiten in der aktiven Stellung der Vorrichtung derart in einer Linie nebeneinander gehalten werden, dass sie eine optische Einheit bilden ausbilden. Diese optische Einheit, bestehend aus den beiden in einer Verlängerung liegenden Verteilerrohren, weist eine Gesamtlänge auf, die mindestens der Achsenbreite des Ausbringfahrzeug entspricht. Bevorzugterweise sind beiden nebeneinander gehaltenen Verteilerrohre zusammen mindestens doppelt so lang wie die Achsenbreite des Ausbringfahrzeugs. Dabei kann außerdem vorgesehen sein, dass der Zuführschlauch eine T-Stück-Verbindung oder eine Y-Stück-Verbindung aufweist, die einen Hauptabschnitt des Zuführschlauchs mit zwei Seitenabschnitten des Zuführschlauchs verbindet, wobei jeder der Seitenabschnitte des Zuführschlauchs je einem Verteiler der beiden Verteilereinheiten zugeordnet ist.

Die Ausgestaltung der Vorrichtung mit zwei separaten Verteilereinheiten hat außerdem den Vorteil, dass die jeweiligen Verteilerrohre in der inaktiven Stellung jeweils parallel zur Fahrtrichtung an zwei gegenüberliegenden Seiten des Ausbringfahrzeugs oder des Güllespeichers angeordnet werden können. Mit einem derartigen Aufbau einer Vorrichtung zur Ausbringung von Gülle lässt sich die Vorrichtung während ihrer Nichtbenutzung besonders platzsparend transportieren bzw. lagern.

Denkbar ist auch, dass die Vorrichtung mindestens einen doppeltwirkenden Zylinder zum Hoch- und Runterklappen des Rahmens und/oder zum Ein- und Ausschwenken der Flügel aufweist. Auf diese Weise lässt sich die Vorrichtung ohne Aufwand von der aktiven Stellung in die inaktive Stellung bzw. von der inaktiven Stellung in die aktive Stellung befördern.

Darüber hinaus kann vorgesehen sein, dass die Vorrichtung mindestens einen Hydraulikmotor zum Antreiben der Förderschnecke aufweist. Ein Hydraulikmotor hat gegenüber einem Verbrennungs- oder Elektromotor den Vorteil, dass er zum Beispiel zusammen mit den doppeltwirkenden Zylindern an demselben Hydrauliksystem angeschlossen werden kann. Hierdurch kann der Wartungsaufwand signifikant minimiert werden, weil nur ein System (das Hydrauliksystem) instandgehalten werden muss.

Eine weitere Ausführungsform kann darauf abstellen, dass die Vorrichtung mindestens eine erste Hydraulikpumpe zum Pumpen der Gülle vom Güllespeicher zu dem mindestens einen Verteiler aufweist. Entsprechend ist es außerdem möglich, dass die Vorrichtung mindestens eine zweite Hydraulikpumpe zum Pumpen der Gülle vom Verteiler zum Verteilerrohr.

Vorteilhafterweise ist desweiteren vorgesehen, dass der Verteiler insbesondere hydraulisch angetrieben ist und insbesondere auch eine Hydraulikpumpe zum Pumpen der Gülle vom Verteiler zum Verteilerrohr aufweist.

Hydraulikpumpen können ebenfalls an das Hydrauliksystem angeschlossen werden, das sich auch Zylinder und Hydraulikmotor zu Nutze machen, was ebenfalls zu einer Minimierung des Wartungsaufwands führt.

Alternativ hierzu ist vorgesehen, dass die Gülle aufgrund der Schwerkraft oder mithilfe einer Vakuumpumpe aus dem Güllespeicher zu dem Verteiler gelangt oder von dessen Pumpwirkung angesaugt oder gepumpt wird.

Gemäß einem weiteren Ausführungsbeispiel ist vorgesehen, dass die Vorrichtung mindestens eine Steuereinheit umfasst. Dabei kann die Steuereinheit insbesondere dazu ausgebildet sein, eine Steuerung des mindestens einen doppeltwirkenden Zylinders, des mindestens einen Hydraulikmotors, der ersten Hydraulikpumpe und/oder der zweiten Hydraulikpumpe zu ermöglichen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: in perspektivische Ansicht ein Schema einer Vorrichtung zur Ausbringung von Gülle in inaktiven Stellung nach der Erfindung;
- Fig. 2: in perspektivische Ansicht ein Schema einer Vorrichtung zur Ausbringung von Gülle in aktiven Stellung nach der Erfindung;
- Fig. 3: in schematischen Ansicht eine Verteilereinheit nach der Erfindung;
- Fig. 4: in schematischer Ansicht einen Querschnitt eines Verteilerrohrs nach der Erfindung
- Fig. 5: eine schematische Darstellung eines hydraulischen Systems der Vorrichtung nach der Erfindung.
- Fig. 6-8: je in einer Ansicht verschiedene Varianten des Verteilerrohres nach der Erfindung
- Fig. 9a ,9b: je in einer Ansicht verschiedene Stellungen der Verschlussvorrichtung des Verteilerrohres nach der Erfindung.

Im Folgenden werden einander ähnliche oder identische Merkmale mit denselben Bezugszeichen gekennzeichnet.

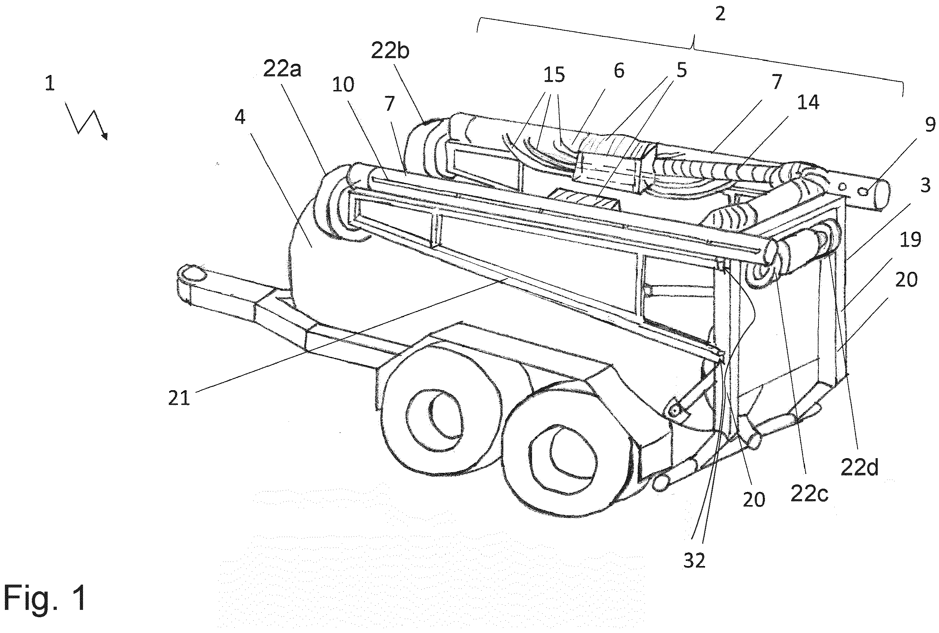

Figur 1 zeigt in perspektivischer Ansicht ein Schema einer Vorrichtung 1 zur Ausbringung von Gülle in inaktiver Stellung. Die in Figur 1 gezeigte Vorrichtung 1 umfasst dabei zwei Verteilereinheiten 2 sowie eine Halterung 3 zur Befestigung der beiden Verteilereinheit 2 an einem Güllespeicher 4, wobei der Güllespeicher 4 selbst nicht Teil der erfindungsgemäßen Vorrichtung 1 ist.

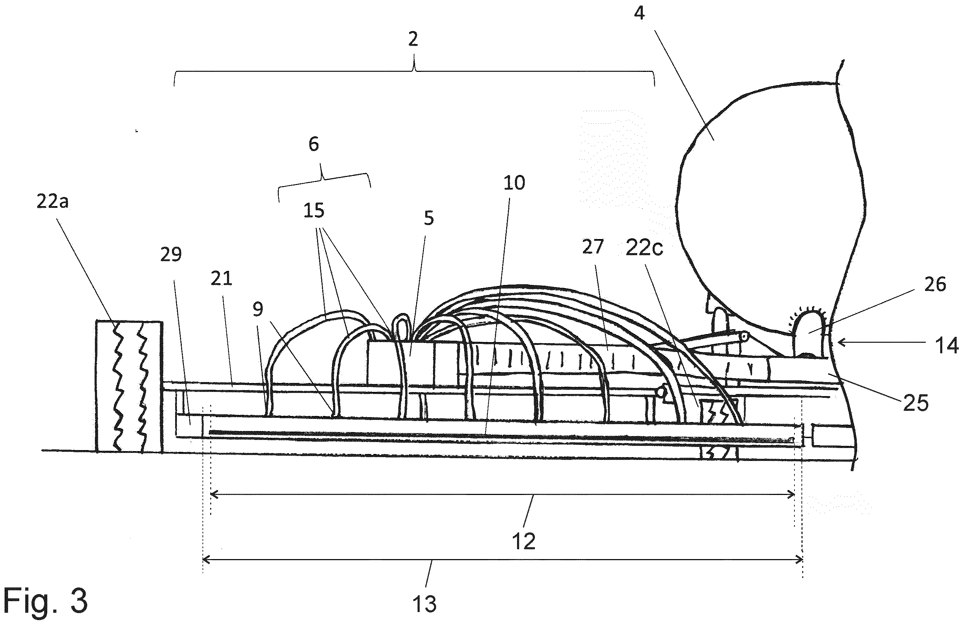

Jede Verteilereinheit 2 umfasst einen Verteiler 5, ein Schlauchsystem 6 bestehend aus einer Vielzahl von Schläuchen 15 sowie ein Verteilerrohr 7. Die Verteilerrohre 7 weisen jeweils entlang ihrer Mantelfläche 8 Eintrittsöffnungen 9 zum fluiddichten Verbinden des Verteilerrohrs 7 mit den Schläuchen 15 des Schlauchsystems 6 auf. Darüber hinaus weisen die Verteilerrohre 7 der in Figur 1 gezeigten Vorrichtung 1 entlang ihrer Mantelfläche 8 eine schlitzförmige Austrittsöffnung 10 mit einer Länge 12 auf, die sich in Längsrichtung des Verteilerrohrs 7 erstreckt. Aufgrund der perspektivischen Ansicht ist in Figur 1 nur eine der beiden längsschltzartigen Austrittsöffnungen 10 der Vorrichtung 1 zu sehen. Die Austrittsöffnung 10 erstreckt sich dabei nahezu über die gesamte Länge 13 des Verteilerrohres 7 (siehe Figur 3) .

Die Halterung 3 umfasst einen Rahmen 19 mit zwei gegenüberliegenden Seitenteilen 20 auf, an denen je ein Flügel 21 angeordnet ist (nur ein Flügel 21 gezeigt). Die Flügel 21 sind dabei über eine Gelenk- oder Scharnierverbindung 32 schwenkbar mit den Seitenteilen 20 des Rahmens 19 verbunden. An den schwenkbaren Flügeln 21 sind jeweils die Verteilereinheiten 2 angeordnet.

Die in Figur 1 gezeigte Vorrichtung 1 befindet sich in einer inaktiven Stellung. In dieser Stellung kann die Vorrichtung 1 problemlos transportiert oder gelagert werden. Dabei ist der Rahmen 19 hochgeklappt, d.h. er befindet sich in einer Position, die senkrecht zum Boden ist. Die Flügel 21 und somit die Verteilerrohre 7 sind ferner derart eingeklappt, dass sie seitlich neben dem Güllespeicher 4 und damit parallel zur Fahrtrichtung des Ausbringfahrzeugs vorliegen.

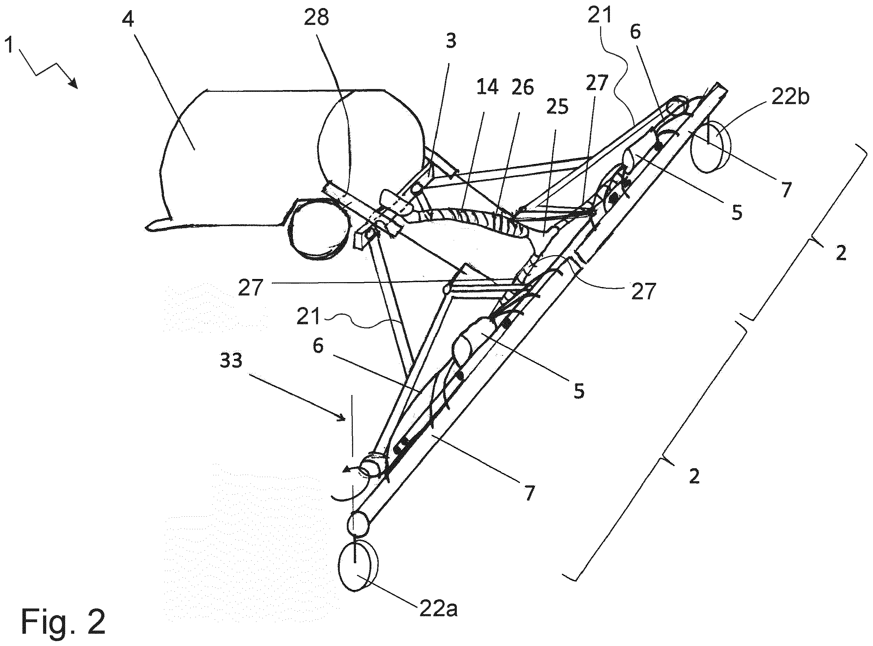

Figur 2 zeigt in perspektivischer Ansicht ein Schema einer Vorrichtung 1 zur Ausbringung von Gülle in aktiver Stellung, also in der Stellung, in der die Gülle aufs Feld abgegeben werden kann. Die gezeigte Vorrichtung umfasst zwei Verteilerrohre 7, welche im Wesentlichen in Querstellung zur Fahrtrichtung des Ausbringfahrzeugs ausgerichtet sind. Die Verteilerrohre 7 befinden sich ferner in Bodennähe (bevorzugt 5 cm oder 10 cm bis 20cm oder 30 cm vom Boden entfernt). Dazu ist der Rahmen 19 vollständig ausgeklappt, sodass er sich im Wesentlichen in einer Position parallel zum Boden befindet. Darüber hinaus sind beide Flügel 21 aufgeklappt, sodass sie ebenfalls parallel zum Boden sowie in Querstellung zur Fahrtrichtung vorliegen. In der aktiven Stellung sind beide Verteilerrohre 7 im in einer gemeinsamen Linie nebeneinander angeordnet. Um einen Teil des Gewichts der Verteilereinheiten 2 sowie der Halterung 3 aufzunehmen, weisen die Flügel 21 an ihren äußeren Enden je ein Rad 22a, 22b auf, welches um eine vertikal orientierte Drehachse 33 drehbar mit dem Flügel 21 verbunden ist. wobei die Drehachse 33 senkrecht zur Rotationsachse des Rads 22 verläuft. Hierdurch wird das Risiko eines Schleifens oder Blockierens der Räder 22 bei Kurvenfahrten des Ausbringfahrzeugs verringert. Weitere Räder 22c, 22d etwa an den jeweils anderen Enden der Flügel 21 oder am Rahmen 19, können ebenfalls vorgesehen sein, sind aber in Figur 2 nicht dargestellt. Dabei ist vorgesehen, dass die Räder 22c, 22d im mittleren Bereich der Vorrichtung, auf Höhe der Rückseite des Güllespeichers 4 vorgesehen sind und hier eine zusätzliche Abschätzung der Last auf dem Boden erlauben (siehe Fig.1).

Wie aus Figur 2 weiter zu entnehmen ist, weist die Vorrichtung 1 einen Zuführschlauch 14 auf. Über den Zuführschlauch 14 werden die Verteiler 5 fluiddicht mit dem Güllespeicher 4 verbunden. Dazu weist der Zuführschlauch 14 eine T-Stück-Verbindung 25 auf, die den Zuführschlauch 14 in einen Hauptabschnitt 26 und zwei Seitenabschnitte 27 unterteil, wobei jeder der Seitenabschnitte 27 des Zuführschlauchs 14 je einem Verteiler 5 der beiden Verteilereinheiten 2 zugeordnet ist. Die T-Verbindung 25 erlaubt es, gleichzeitig zwei Verteiler 5 aus einem Güllespeicher 4 zu versorgen.

Figur 3 zeigt in einer schematischen Ansicht eine Verteilereinheit 2, wobei sich die Vorrichtung 1 in ihrer aktiven Stellung befindet. Zu sehen ist ein Verteiler 5, welcher über einen Zuführschlauch 14 mit einem Güllespeicher 4 fluiddicht verbunden ist. Der Zuführschlauch 14 lässt sich dabei in einen Hautabschnitt 26 und einen Seitenabschnitt 27 unterteilen, welche jeweils über eine T-Stück-Verbindung 25 miteinander in Verbindung stehen. Über den Verteiler 5 wird die Gülle aus dem Güllespeicher 5 über ein Schlauchsystem 6 umfassend eine Vielzahl von Schläuchen 15 zu den Eintrittsöffnungen 9 des Verteilerrohrs 7 gepumpt. Wie in Figur 3 gezeigt ist, sind die Eintrittsöffnungen 9 im Wesentlichen über die gesamte Länge 13 des Verteilerrohrs 7 verteilt, wodurch eine gleichmäßige Befüllung des Rohres 7 gewährleistet werden kann.

Das Verteilerrohr 7 weist außerdem eine längsverlaufende, schlitzförmige Austrittsöffnung 10 auf, welche an einer dem Boden zugewandten Seite des Verteilerrohrs 7 in der Mantelfläche 8 des Verteilerrohrs 7 angeordnet ist. Gemäß dem in Figur 3 gezeigten Ausführungsbeispiel ist vorgesehen, dass sich die schlitzförmige Austrittsöffnung 10 im Wesentlichen über die gesamte Länge 13 des Verteilerrohrs 7 erstreckt. Auf diese Weise lässt sich gewährleisten, dass die Gülle gleichmäßig unterhalb des Verteilerrohrs verteilt wird, anstatt nur auf bestimmte Bereiche unterhalb des Verteilerrohrs begrenzt zu werden. Mit 12 ist der Länge der Austrittsöffnung 10 gekennzeichnet.

Die dargestellte Verteilereinheit 2 wird von einer Halterung 3 getragen, die einen Rahmen 19 und zwei schwenkbar mit dem Rahmen 19 verbundene Flügel 21 umfasst, wobei nur ein Flügel 21 gezeigt ist. Dabei sind zumindest Verteiler 5 und Verteilerrohr 7 an dem Flügel 21 angebracht. Der Flügel 21 weist an seinem Ende, das in aktiver Stellung vom Güllespeicher 4 entfernt nach außen zeigt, ein Rad 22a auf. Wie in Figur 3 gezeigt ist, weist der Rahmen 19 der Halterung 3 mittig ein weiteres Rad 22c auf. Die Räder 22a,c der Halterung 3 dienen vor allem dazu, zumindest einen Teil des Gewichts von Halterung 3 und Verteilereinheit 2 in der aktiven Stellung zu tragen und somit ein Anheben des Zugfahrzeugs und damit einhergehend einen Verlust der Bodentraktion und schließlich der Antriebskraft des Zugfahrzeugs zu verhindern.

In einer bevorzugten Variante ist vorgesehen, dass die Räder 22a bis 22d relativ zu den Flügel 21 position- bzw. höhenverstellbar sind und hieraus letztendlich eine einstellbare Höhe der Austrittsöffnung 10 gegenüber dem Boden resultiert. Eine solche Einstellbarkeit kann zum Beispiel auch automatisch, zum Beispiel mittels entsprechender (hydraulischer) Stellantrieben oder ähnlichem erfolgen.

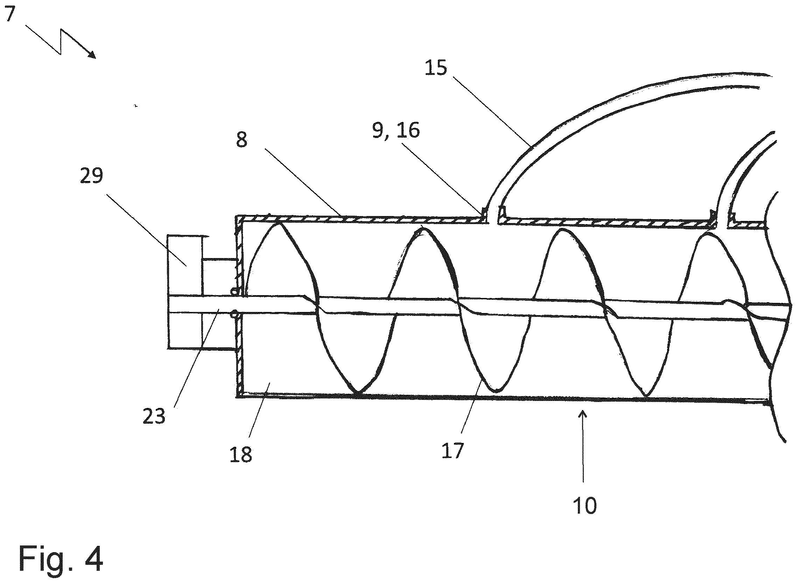

In Figur 4 ist in schematischer Ansicht ein Querschnitt eines Verteilerrohrs 7 gezeigt. Die Gülle wird über die Schläuche 15 des Schlauchsystems 6 in durch Befüllstutzen 16 in den Innenraum 18 des Verteilerrohrs 7 gepumpt. Dort sorgt eine Förderschnecke 17 mit Antriebswelle 23 für eine gleichmäßige Verteilung der Gülle innerhalb des Verteilerrohrs 7.

Die Austrittsöffnung 10 befindet sich im unteren Bereich, idealerweise direkt über dem Boden in seiner nächsten Nähe. Ein Vorteil des erfindungsgemäßen Vorschlages liegt insbesondere darin, dass die Austrittsöffnung 10 sehr nahe am Boden positioniert ist und so eine Aerosolbildung vermieden bzw. verringert wird und die Gülle möglichst gleichmäßig am Boden verteilt wird.

Darüber hinaus drückt die Förderschnecke 17 die Gülle durch eine stetige Drehbewegung aus der schlitzförmigen Austrittsöffnung 10. Darüber hinaus kann die Förderschnecke 17 Schneidelemente aufweisen, die der Zerkleinerung der Gülle dienen. Die Antriebswelle 23 zum Antreiben der Förderschnecke 17 wird durch einen Hydraulikmotor angetrieben und ist bevorzugt außerhalb des Verteilerrohres 7 angeordnet, wobei die Antriebswelle 23 ein Gehäuse aufweisen kann, das bündig mit dem Verteilerrohr 7 abschließt.

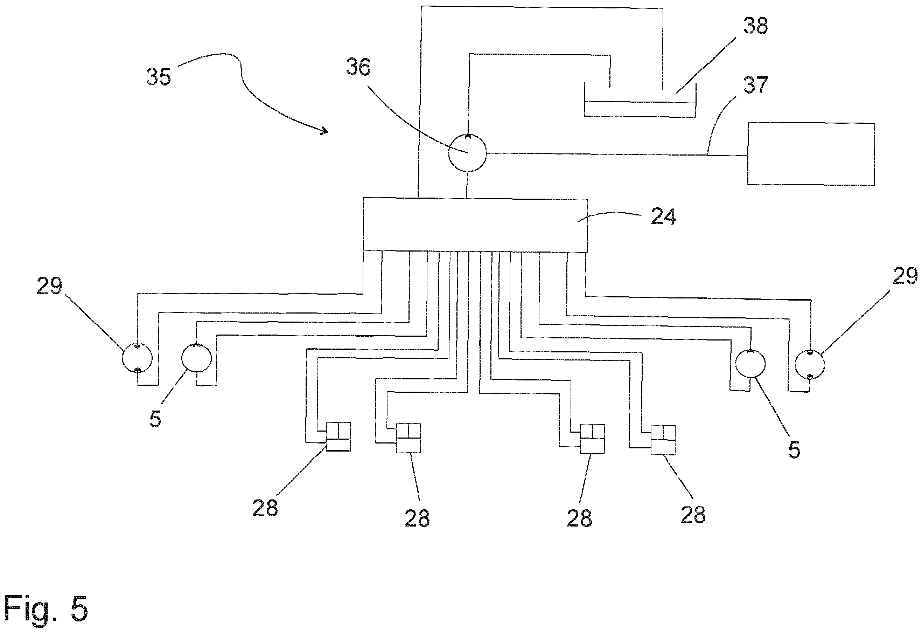

In Figur 5 ist schließlich eine schematische Darstellung eines hydraulischen Systems 35 der Vorrichtung 1 gezeigt. Das Hydrauliksystem 35 umfasst hierbei zunächst eine Hydraulikpumpe 36, die zum Beispiel über die Zapfwelle 37 von der Antriebswelle der Zugmaschine angetrieben wird. Die Hydraulikpumpe 36 saugt bevorzugt aus einem Ölvorrat 38 Hydrauliköl an. In der Steuereinheit 24 werden die Ölströme entsprechend verteilt. Hierzu umfasst das Hydrauliksystem 35 weiterhin zwei Hydraulikmotoren 29, wobei jeder Hydraulikmotor 29 je eine Förderschnecke 17 antreibt, eine Hydraulikpumpe, die Gülle vom Güllespeicher 4 zu den Verteilern 5 pumpt. Auch die Verteiler 5 sind hydraulisch angetrieben und besitzen gegebenenfalls auch eine Hydraulikpumpe. Auch die Verteiler 5 gehören zu dem hydraulischen System 35.

Das weiteren umfasst das Hydrauliksystem 35 vier doppeltwirkende Zylinder 28 zum Hoch- und Runterklappen des Rahmens bzw. zum Ein- und Ausschwenken der Flügel 21. Das Hydrauliksystem 35 kann dabei durch eine gemeinsame Steuereinheit 24, das händisch und/oder automatisch betätigte Steuerventile umfasst, gesteuert werden.

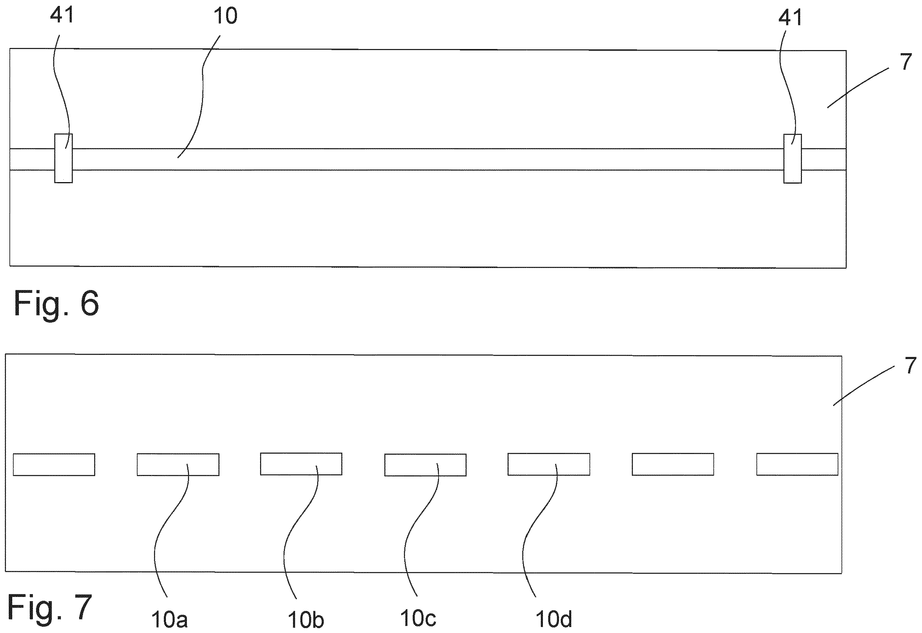

Die Fig. 6-8 zeigen verschiedene Varianten des Verteilerrohres 7.

In Figur 6 erstreckt sich über die gesamte Längserstreckung des Verteilerrohres 7 eine schlitzförmige Austrittsöffnung 10. Hierzu wird das Verteilerrohr 7 in Längsrichtung geschlitzt. Vorteilhafter Weise sind an der schlitzförmigen Austrittsöffnung 10, vorzugsweise an deren End- und Mittelbereich, in Umfangsrichtung verlaufende Laschen 41 angeschweißt, die das Verteilerrohr 7 stabilisieren.

In Figur 7 sind anstelle einer einzigen schlitzförmigen Austrittsöffnung 10 eine Mehrzahl von jeweils kleineren Austrittsöffnungen 10a, 10b, 10c, 10d vorgesehen. Diese befinden sich in Längsrichtung des Verteilerrohres 7 hintereinander, mit einem geringen Abstand zueinander. Dabei ist der Abstand zwischen ihnen geringer wie deren Längserstreckung.

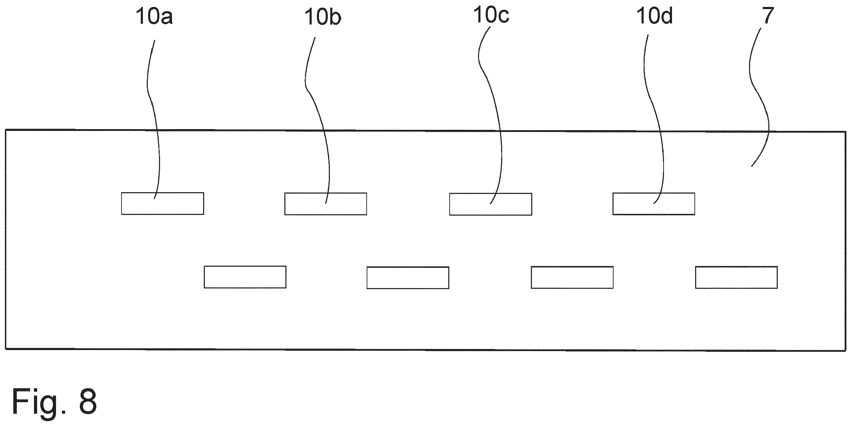

In dem in Figur 8 gezeigten Ausführungsbeispiel sind zwei Reihen von schlitzförmigen Austrittsöffnungen 10a, 10b, 10c, 10d nebeneinander, und auf Lücke versetzt, angeordnet. Die Austrittsöffnungen 10a, 10b, 10c, 10d sind vorzugsweise alle gleich lang. Die Anordnung ist dabei so gewählt, dass die Länge der jeweiligen Austrittsöffnungen gleich deren Abstand zueinander entspricht und so, in Längsrichtung gesehen, über die gesamte Länge des Verteilerrohres Gülle abgegeben werden kann, was bei der Verwendung eines solchen Verteilerrohres zu einem streifenfreien Ausbringbild führt.

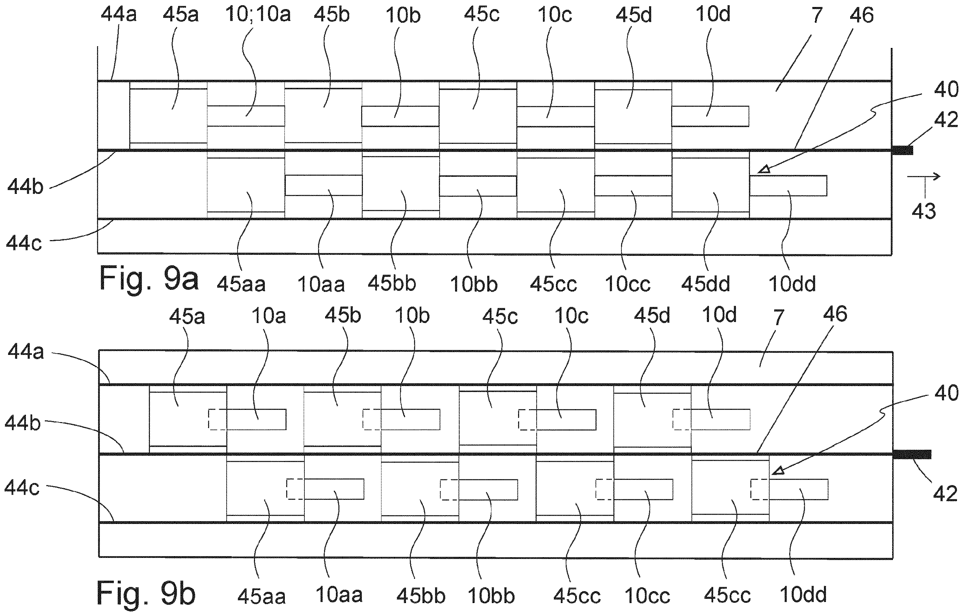

Der Vorschlag nach Figur 9a und 9b baut auf dem Verteilerrohr 7 nach Figur 8 auf. Auch hier besitzt das Verteilerrohr 7 zwei Reihen von Austrittsöffnungen 10. die Austrittsöffnungen der oberen Reihe sind bedingt Bezugszeichen 10a, 10b, 10c, 10d gekennzeichnet, die Austrittsöffnung der untere Reihe mit den Bezugszeichen 10aa, 10bb, 10cc, 10dd.

Für die Austrittsöffnungen 10a, 10b, 10c, 10d, 10aa, 10bb, 10cc, 10dd ist eine gemeinsame Verschlussvorrichtung 40 vorgesehen. Die Verschlussvorrichtung 40 besteht aus drei parallel angeordneten, in Längsrichtung des Verteilerrohres 7 verlaufenden Führungsschienen 44a, 44b und 44c. Die mittlere Führungsschienen 44b befindet sich dabei zwischen dem beiden Reihen der Austrittsöffnungen 10. Die obere Reihe der Austrittsöffnungen 10a, 10b, 10c, 10d befindet sich zwischen der mittleren Führungsschiene 44b und der oberen Führungsschienen 44a. Die untere Reihe der Austrittsöffnungen 10aa, 10bb, 10cc, 10dd befindet sich zwischen der mittleren Führungsschiene 44b und der unteren Führungsschienen 44c.

Für jede Austrittsöffnung 10a, 10b, 10c, 10d, 10aa, 10bb, 10cc, 10dd ist eine Abdeckung 45a, 45b, 45c, 45d, 45aa, 45bb, 45cc, 45dd vorgesehen. Die Abdeckungen 45a, 45b, 45c, 45d, 45aa, 45bb, 45cc, 45dd sind auf den Führungsschienen 44a, 44b und 44c beweglich angeordnet und durch eine zentrales Gestänge 46 gemeinsam bewegbar. Dabei sind die Abdeckungen 45a, 45b, 45c, 45d, auf der mittleren und oberen Führungsschiene 44b und 44a gelagert und die Abdeckungen 45aa, 45bb, 45cc, 45dd, auf der mittleren und unteren Führungsschiene 44b und 44c gelagert.

Am rechten Ende besitzt das zentrale Gestänge 46 einen Handgriff 42 bis welche die Verschlussvorrichtung 40 in Längsrichtung des Verteilerrohres 7 verstellt und so die Öffnungsfläche der Austrittsöffnungen 10a, 10b, 10c, 10d, 10aa, 10bb, 10cc, 10dd verändert und eingestellt werden kann. Dies ist in Figur 9b gezeigt, bei welchem das zentrale Gestänge 46 durch den Handgriff 42 nach rechts (siehe Pfeil 43 in Figur 9a) versetzt ist und so die Abdeckungen 45a, 45b, 45c, 45d, 45aa, 45bb, 45cc, 45dd jeweils einen Teil der Austrittsöffnung 10a, 10b, 10c, 10d, 10aa, 10bb, 10cc, 10dd verdecken. Dies ist durch den gestrichelten Bereich der Austrittsöffnung 10a, 10b, 10c, 10d, 10aa, 10bb, 10cc, 10dd angedeutet, die durch die Abdeckungen 45a, 45b, 45c, 45d, 45aa, 45bb, 45cc, 45dd verdeckt sind.

### Bezugszeichenliste

| | | | |
|---|---|---|---|
| 1 | Vorrichtung | 29 | Hydraulikmotor |
| 2 | Verteilereinheit | | |
| 3 | Halterung | | |
| 4 | Güllespeicher | 32 | Scharnierverbindung |
| 5 | Verteiler | 33 | Drehachse |
| 6 | Schlauchsystem | 35 | Hydrauliksystem |
| 7 | Verteilerrohr | 36 | Hydraulikpumpe |
| 8 | Mantelfläche | 37 | Zapfwelle |
| 9 | Eintrittsöffnungen | 38 | Ölvorrat |
| 10 | Austrittsöffnung | 40 | Verschlussvorrichtung |
| 10a-10d | | | |
| 12 | Länge der Austrittsöffnung | 41 | Laschen |
| 13 | Länge des Verteilerrohrs | 42 | Handgriff |
| 14 | Zuführschlauch | 43 | Pfeil |
| 15 | Schläuche | 44a,b,c | Führungsschienen |
| 17 | Förderschnecke | 45 | Abdeckung |
| 18 | Innenraum | 46 | zentrales Gestänge |
| 19 | Rahmen | | |
| 20 | Seitenteile | | |
| 21 | Flügel | | |
| 22a-d | Rad | | |
| 23 | Antriebswelle | | |
| 24 | Steuereinheit | | |
| 25 | T-Stück-Verbindung | | |
| 26 | Hauptabschnitt | | |
| 27 | Seitenabschnitten | | |
| 28 | doppeltwirkende Zylinder | | |

## Patentansprüche

1. Vorrichtung zur Verteilung von Gülle, umfassend mindestens eine Verteilereinheit (2) sowie eine Halterung (3) zur Befestigung der mindestens einen Verteilereinheit (2) an einem Güllespeicher (4), wobei die mindestens eine Verteilereinheit (2) folgendes umfasst:
▪ einen Verteiler (5);
▪ ein Schlauchsystem (6),
**dadurch gekennzeichnet, dass**
▪ die Vorrichtung mindestens ein Verteilerrohr (7) umfasst,
▪ wobei das Verteilerrohr (7) entlang einer Mantelfläche (8) Eintrittsöffnungen (9) zum fluiddichten Verbinden des Verteilerrohrs (7) mit dem Schlauchsystem (6) aufweist, und
▪ wobei das Verteilerrohr an seiner Mantelfläche (8) mindestens eine Austrittsöffnung (10) aufweist, die sich im Wesentlichen in eine Längsrichtung des Verteilerrohrs (7) erstreckt.

2. Vorrichtung nach einem der vorhergehenden Ansprüche, **dadurch gekennzeichnet, dass** die Austrittsöffnung (10) eine Länge (12) aufweist, die mindestens ein Viertel, bevorzugt mindestens die Hälfte, einer Länge (13) des Verteilerrohrs (7) beträgt.

3. Vorrichtung nach einem der vorhergehenden Ansprüche, **dadurch gekennzeichnet, dass** die Vorrichtung einen Zuführschlauch (14) umfasst, der den mindestens einen Verteiler (5) fluiddicht mit dem Güllespeicher (4) verbindet.

4. Vorrichtung nach einem der vorhergehenden Ansprüche, **dadurch gekennzeichnet, dass** das Schlauchsystem (6) eine Mehrzahl von Schläuchen (15) umfasst, die den Verteiler (5) mit je einer der Eintrittsöffnungen (9) fluiddicht verbinden.

5. Vorrichtung nach einem der vorhergehenden Ansprüche, **dadurch gekennzeichnet, dass** die Eintrittsöffnungen (9) als Befüllstutzen (16) ausgebildet sind, die im Wesentlichen gleichmäßig über die Länge des Verteilerrohrs (7) verteilt sind.

6. Vorrichtung nach einem der vorhergehenden Ansprüche, **dadurch gekennzeichnet, dass** das Verteilerrohr (7) eine Förderschnecke (17) aufweist, die in einem Innenraum (18) des Verteilerrohrs (7) angeordnet ist.

7. Vorrichtung nach einem der vorhergehenden Ansprüche, **dadurch gekennzeichnet, dass** die Halterung (3) einen Rahmen (19) umfasst.

8. Vorrichtung nach Anspruch 7, **dadurch gekennzeichnet, dass** der Rahmen (19) an zwei gegenüberliegenden Seitenteilen (20) je einen Flügel (21) aufweist, wobei jeder Flügel (21) schwenkbar mit dem Rahmen (19) verbunden ist.

9. Vorrichtung nach Anspruch 8, **dadurch gekennzeichnet, dass** an jedem Flügel (21) je eine Verteilereinheite (2) angeordnet ist.

10. Vorrichtung nach einem der vorhergehenden Ansprüche 8 oder 9, **dadurch gekennzeichnet, dass** die Halterung (3) mindestens ein Rad (22) oder einen Gleitteller aufweist, wobei insbesondere jedem Flügel (21) ein Rad (22) oder ein Gleitteller zugeordnet ist und das mindestens eine Rad (22) insbesondere drehbar an der Halterung (3) angebracht ist.

11. Vorrichtung nach einem der vorhergehenden Ansprüche, **dadurch gekennzeichnet, dass** die Vorrichtung zwei Verteilereinheiten (2) umfasst.

12. Vorrichtung nach Anspruch 3, **dadurch gekennzeichnet, dass** der Zuführschlauch (14) eine T-Stück-Verbindung (25) aufweist, die einen Hauptabschnitt (26) des Zuführschlauchs (14) mit zwei Seitenabschnitten (27) des Zuführschlauchs (14) verbindet.

13. Vorrichtung nach einem der Ansprüche 6 bis 10, **dadurch gekennzeichnet, dass** die Vorrichtung mindestens einen doppeltwirkenden Zylinder (28) zum Hoch- und Runterklappen des Rahmens (19) und/oder zum Ein- und Ausschwenken der Flügel (21) aufweist und/oder die Vorrichtung mindestens einen Hydraulikmotor (29) zum Antreiben der Förderschnecke (17) aufweist.

14. Vorrichtung nach einem der vorhergehenden Ansprüche, **dadurch gekennzeichnet, dass** die Vorrichtung mindestens eine erste Hydraulikpumpe zum Pumpen der Gülle vom Güllespeicher (4) zu dem mindestens einen Verteiler (5) aufweist und/oder der Verteiler (5) insbesondere hydraulisch angetrieben ist und insbesondere auch eine Hydraulikpumpe zum Pumpen der Gülle vom Verteiler (5) zum Verteilerrohr (7) aufweist.

15. Vorrichtung nach einem der vorhergehenden Ansprüche, **dadurch gekennzeichnet, dass** die Vorrichtung mindestens eine Steuereinheit (24) umfasst und die Steuereinheit (24) insbesondere dazu ausgebildet ist, eine Steuerung des mindestens einen doppeltwirkenden Zylinders (28), des mindestens einen Hydraulikmotors (29), der Hydraulikpumpe und/oder des Verteilers (5) zu ermöglichen.

## Claims

1. Device for distributing liquid manure, comprising at least one distributor unit (2) and a holder (3) for fastening the at least one distributor unit (2) to a liquid manure storage tank (4), wherein the at least one distributor unit (2) comprises the following:
▪ a distributor (5);
▪ a hose system (6),
**characterized in that**
▪ the device comprises at least one distribution pipe (7),
▪ wherein the distributor pipe (7) has inlet openings (9) along a lateral surface (8) for fluid-tight connection of the distributor pipe (7) to the hose system (6), and
▪ wherein the distributor pipe has at least one outlet opening (10) on its lateral surface (8), which extends substantially in a longitudinal direction of the distributor pipe (7).

2. Device according to one of the preceding claims, **characterized in that** the outlet opening (10) has a length (12) which is at least a quarter, preferably at least half, of a length (13) of the distributor pipe (7).

3. Device according to one of the preceding claims, **characterized in that** the device comprises a feed hose (14) which connects the at least one distributor (5) to the slurry reservoir (4) in a fluid-tight manner.

4. Device according to one of the preceding claims, **characterized in that** the hose system (6) comprises a plurality of hoses (15) which connect the distributor (5) to one of the inlet openings (9) in a fluid-tight manner.

5. Device according to one of the preceding claims, **characterized in that** the inlet openings (9) are designed as filling nozzles (16) which are distributed essentially uniformly over the length of the distributor pipe (7).

6. Device according to one of the preceding claims, **characterized in that** the distribution pipe (7) has a screw conveyor (17) which is arranged in an interior (18) of the distribution pipe (7).

7. Device according to one of the preceding claims, **characterized in that** the holder (3) comprises a frame (19).

8. Device according to claim 7, **characterized in that** the frame (19) has a wing (21) on each of two opposite side parts (20), each wing (21) being pivotably connected to the frame (19).

9. Device according to claim 8, **characterized in that** a distributor unit (2) is arranged on each wing (21).

10. Device according to one of the preceding claims 8 or 9, **characterized in that** the holder (3) has at least one wheel (22) or a sliding plate, in particular a wheel (22) or a sliding plate being assigned to each wing (21) and the at least one wheel (22) being attached to the holder (3), in particular in a rotatable manner.

11. Device according to one of the preceding claims, **characterized in that** the device comprises two distributor units (2).

12. Device according to claim 3, **characterized in that** the feed hose (14) has a T-piece connection (25) which connects a main section (26) of the feed hose (14) to two side sections (27) of the feed hose (14).

13. Device according to one of claims 6 to 10, **characterized in that** the device has at least one double-acting cylinder (28) for folding the frame (19) up and down and/or for swinging the wings (21) in and out and/or the device has at least one hydraulic motor (29) for driving the screw conveyor (17).

14. Device according to one of the preceding claims, **characterized in that** the device has at least one first hydraulic pump for pumping the slurry from the slurry tank (4) to the at least one distributor (5) and/or the distributor (5) is in particular hydraulically driven and in particular also has a hydraulic pump for pumping the slurry from the distributor (5) to the distributor pipe (7).

15. Device according to one of the preceding claims, **characterized in that** the device comprises at least one control unit (24) and the control unit (24) is designed in particular to enable control of the at least one double-acting cylinder (28), the at least one hydraulic motor (29), the hydraulic pump and/or the distributor (5).

## Revendications

1. Dispositif pour la distribution de lisier, comprenant au moins une unité de distribution (2) ainsi qu'un support (3) pour la fixation de la au moins une unité de distribution (2) à un réservoir de lisier (4), la au moins une unité de distribution (2) comprenant ce qui suit :
▪ un distributeur (5) ;
▪ un système de tuyaux (6),
**caractérisé en ce- que**
▪ le dispositif comprend au moins un tube de distribution (7),
▪ le tuyau de distribution (7) présentant le long d'une surface d'enveloppe (8) des ouvertures d'entrée (9) pour relier de manière étanche aux fluides le tuyau de distribution (7) au système de tuyaux (6), et
▪ le tube de distribution présentant sur sa surface d'enveloppe (8) au moins une ouverture de sortie (10) qui s'étend essentiellement dans une direction longitudinale du tube de distribution (7).

2. Dispositif selon l'une des revendications précédentes, **caractérisé en ce que** l'orifice de sortie (10) présente une longueur (12) qui est au moins égale au quart, de préférence au moins égale à la moitié, d'une longueur (13) du tube de distribution (7).

3. Dispositif selon l'une des revendications précédentes, **caractérisé en ce que** le dispositif comprend un tuyau d'alimentation (14) qui relie de manière étanche aux fluides ledit au moins un distributeur (5) au réservoir de lisier (4).

4. Dispositif selon l'une des revendications précédentes, **caractérisé en ce que** le système de tuyaux (6) comprend une pluralité de tuyaux (15) reliant de manière étanche aux fluides le distributeur (5) à chacun des orifices d'entrée (9).

5. Dispositif selon l'une des revendications précédentes, **caractérisé en ce que** les orifices d'entrée (9) sont réalisés sous la forme de tubulures de remplissage (16) réparties de manière sensiblement uniforme sur la longueur du tube de distribution (7).

6. Dispositif selon l'une des revendications précédentes, **caractérisé en ce que** le tube de distribution (7) comporte une vis sans fin (17) disposée dans un espace intérieur (18) du tube de distribution (7).

7. Dispositif selon l'une des revendications précédentes, **caractérisé en ce que** le support (3) comprend un cadre (19).

8. Dispositif selon la revendication 7, **caractérisé en ce que** le cadre (19) comporte une aile (21) sur chacune de deux parties latérales opposées (20), chaque aile (21) étant reliée de manière pivotante au cadre (19).

9. Dispositif selon la revendication 8, **caractérisé en ce qu'**une unité de distribution (2) est disposée sur chaque aile (21).

10. Dispositif selon l'une des revendications précédentes 8 ou 9, **caractérisé en ce que** le support (3) comporte au moins une roue (22) ou un plateau coulissant, une roue (22) ou un plateau coulissant étant notamment associé à chaque vantail (21), ladite au moins une roue (22) étant notamment montée rotative sur le support (3).

11. Dispositif selon l'une des revendications précédentes, **caractérisé en ce que** le dispositif comprend deux unités de distribution (2).

12. Dispositif selon la revendication 3, **caractérisé en ce que** le tuyau d'alimentation (14) comprend un raccord en T (25) qui relie une partie principale (26) du tuyau d'alimentation (14) à deux parties latérales (27) du tuyau d'alimentation (14).

13. Dispositif selon l'une des revendications 6 à 10, **caractérisé en ce que** le dispositif comporte au moins un vérin à double effet (28) pour le rabattement vers le haut et vers le bas du châssis (19) et/ou pour le pivotement vers l'intérieur et vers l'extérieur des ailes (21) et/ou le dispositif comporte au moins un moteur hydraulique (29) pour l'entraînement de la vis d'alimentation (17).

14. Dispositif selon l'une des revendications précédentes, **caractérisé en ce que** le dispositif comprend au moins une première pompe hydraulique pour pomper le lisier du réservoir de lisier (4) vers le au moins un distributeur (5) et/ou le distributeur (5) est notamment entraîné hydrauliquement et comprend notamment également une pompe hydraulique pour pomper le lisier du distributeur (5) vers le tuyau de distribution (7).

15. Dispositif selon l'une quelconque des revendications précédentes, **caractérisé en ce que** le dispositif comprend au moins une unité de commande (24) et **en ce que** l'unité de commande (24) est notamment adaptée pour permettre une commande dudit au moins un vérin à double effet (28), dudit au moins un moteur hydraulique (29), de la pompe hydraulique et/ou du distributeur (5).
